## Europäisches Patentamt
(19) **European Patent Office**
**Office européen des brevets**

(11) Publication number: **0 090 470**
**B1**

(12) **EUROPEAN PATENT SPECIFICATION**

(45) Date of publication of patent specification: **22.07.87**   (51) Int. Cl.⁴: **A 01 K 1/00**

(21) Application number: **83200428.7**

(22) Date of filing: **28.03.83**

(54) **A device for mews of cattle.**

(30) Priority: **30.03.82 NL 8201332**

(43) Date of publication of application:
**05.10.83 Bulletin 83/40**

(45) Publication of the grant of the patent:
**22.07.87 Bulletin 87/30**

(84) Designated Contracting States:
**BE DE FR GB LU**

(56) References cited:
**DE-A-3 011 445**
**GB-A-1 087 787**
**US-A-3 726 257**

(73) Proprietor: **Donkers, Cornelis Leonardus**
**Wilhelmus**
**54a, Dongenseweg**
**NL-5121 PD Rijen (N.B.) (NL)**

(72) Inventor: **Donkers, Cornelis Leonardus**
**Wilhelmus**
**54a, Dongenseweg**
**NL-5121 PD Rijen (N.B.) (NL)**

(74) Representative: **Siemens, Andreas Meinhard**
**Ernest, Dipl.-Ing.**
**SIEMENS & CIE. Roskam 8**
**NL-4813 GZ Breda (NL)**

Courier Press, Leamington Spa, England.

## Description

The invention relates to a structure for stalling cows in a row in a byre, partitioned from each other, said byre comprising a floor with an edge separating from the passage, a delimiting railing at the frontside parallel to that edge, and a number of parallel and bent dividing rails extending between said frontside and said edge, creating separate boxes, each box-forming pair being connected by a withers beam extending at a distance above the floor and at a distance from the frontside between the dividers.

The British Patent Specification 1.087.787 describes boxes for livestock, wherein dividers can be adapted in a horizontal direction.

The U.S. Patent Specification 3.726.257 discloses a structure for stalling cows in a parallel row and partitioned from each other in a byre, said structure comprising loop-shaped dividers affixed at vertical poles, creating separate boxes, said dividers being connected by a training rail or withers beam at an appropriate distance from said vertical poles and upon said fixed dividers a shaft is pivotably mounted in an adjustable way which keeps said training rail or withers beam, such that a cow will instinctively step backwards as it is getting up, such that droppings will fall in a trench separate from the floor of the stall.

The present invention relates to vertically movable dividers, each pair being connected by a horizontally slidable withers beam, such that the said beam can move together with said dividers.

In this structure the cow will enter and leave the box more easily, not enter the box too far, while the droppings will fall in a passage as well.

The withers beam is positioned in a special construction with the dividers, which causes that the cow is going to lie down under the withers beam to ruminate and can stand up unhampered to stay, to manure and to leave the box in order to go to the milking stall, when this is necessary.

The cow can push up the withers beam easily while rising, such that it can stand up upon its forelegs without difficulty and subsequently it can leave the box backwards, while the dividers move as far as necessary.

In order to obtain standard elements for the device, such that the byre can be extended arbitrarily, it is preferable to apply each withers beam only over the width of each box, i.e. extending between two pivotable dividers, while the withers beam is connected slidable at each of both dividers.

In order to keep the weight of the barriers high enough to compel the cow to leave the the lay-box backwards, each divider according to the invention is movable in a vertical plane around a hinging means and further the distance between the dividers can be increased, as the withers beam can shift accordingly with said dividers.

In this way the advantage is obtained that the cow cannot get trapped in any way between the floor, the withers beam and the dividers.

The structure according to the present invention for stalling cows in a parallel row and partitioned from each other in a byre, comprises loop-shaped dividers (5,5') supported by vertical poles (3) creating separate boxes, each box-forming pair of dividers being connected by a withers beam (6) at an appropriate distance from said vertical poles (3), said withers beam being pivotable upwards and downwards, and is characterized in that said withers beam (6) is made pivotable together with adjacent loop-shaped dividers (5,5'), the withers beam (6) being affixed so as to be slidable in the direction of its length to both dividers (5,5'), which in turn can pivot by means of a hingeing bush (13) around a tube (9), which is positioned at the vertical poles (3).

Each withers beam (6) is connected with the dividers (5,5') by means of a support (15) mounted on each divider (5,5'), permitting said withers beam (6) to slide horizontally if the dividers (5,5') are shifted.

The invention is further elucidated by means of the enclosed drawings 1—2, in which a preferred embodiment is shown.

In the drawings the following is shown:

In figure 1 a view from above is shown of a structure according to the invention.

In figure 2 a side view is shown of the structure depicted in figure 1.

The byre mainly consists of a floor part (1) provided with an edge or threshold (2), and supporting vertical pole (3), and at the outer side of the edge (2) there is a passage (4) for entering, leaving and manure.

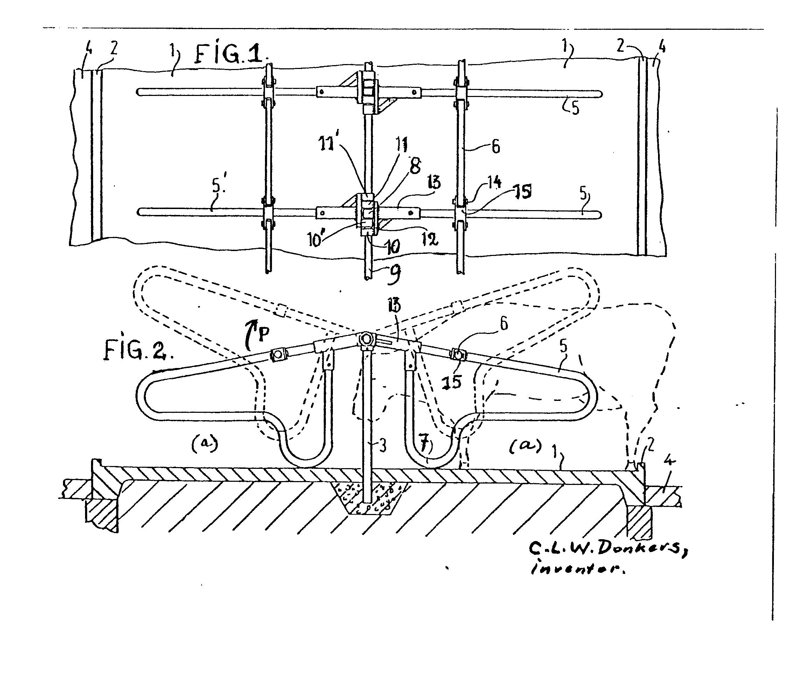

Between the pole (3) and the edge (2) there is a number of loop-shaped dividers (5,5'), four of which only having been drawn in figures 1 and 2.

At a distance from the pole (3) and at a certain height above the floor part (1) a withers beam (6) is positioned at the dividers.

The withers beam (6) as well as the dividers in loop-shape form are made of metal tube material.

In figure 2 it is shown that each divider (5,5') is made of bent pipe, the loop part (7) standing upon the floor part (1).

The withers beam (6), which extends over each box space between the dividers (5,5'), is kept by a support (15) positioned on the divider, which is connected with a delimiting tube (9).

The loop and withers beam can be moved upwards in the direction of the arrow P.

The dividers (5,5') of bent pipe are made each with a supporting loop (7) as an abutment against the floor (1).

The lower part of the divider (5) extends upwards in an inclined direction and thus a saving space (a) over the part of floor (1) is left.

At a distance from delimiting tube (9) the withers beam (6) is positioned, consisting in a tube-shaped part extending mainly between the divider rails (5).

The tube-shaped supports of the poles (3) are provided at their upper ends with bushes (8) affixed to same, through which the tube (9) extends and in which it is fixed.

Each divider (5,5') is provided near the tube (9) with two bushes (10,10') and (11,11'), which are pivotable freely around it, and which are welded upon a supporting plate (12).

The supporting plate (12) is furthermore provided with a bush (13).

The tube-shaped divider (5) is connected to it.

The bush (13) is positioned asymmetrically with regard to the bushes (10) and (11).

In figures 1 and 2, the symmetrical two rows stalling device at both sides of the vertical pole (3) is depicted, wherein the bushings (10) and (11) can be positioned in such a way with regard to the bushings (10') and (11'), that the dividers (5) and (5'), as shown in figure 2, are positioned opposite of each other.

The bush (8) upon the support is blocking the dividers (5) axially.

The withers beam (6) is constructed in the form of a tube slidingly extending through the dividers (5) and said tube is provided with a slot.

Fixing means (14) affixes the withers beam to a support (15) which is attached to each divider (5).

In this manner a sliding connection is obtained between each withers beam (6) and the dividers (5) on either side.

An upwards movement of each withers beam (6) is ensured, because with that movement both dividers (5) can move upwards too, whereby the increase of distance between the rails (5) can be picked up by a shifting of the withers beam (6) in respect of the slot (14) through its opening.

With this construction a very solid effective structure is obtained.

It is still observed that the dividers (5) according to figures 1 and 2 show clearly, that there is sufficient space between the rails (5) and the floor part (1), such that the cow will not get trapped, and on rising it will have sufficient freedom of motion by the possibility to lift freely the dividers (5) with the withers beam (6).

The weight exerts a slight pressure for the animal, such that it will be influenced to step backwards out of the box.

The placement of the withers beam (6) is determined by a distance such that in adaptation to the size of the cow, the animal will not be enabled to enter the box too far, so that in a standing position of the animal the manure will always be deposited in the manure passage (4).

### Claims

1. A structure for stalling cows in a row and partitioned from each other in a byre, said structure comprising loop-shaped dividers (5,5') supported by vertical poles (3), creating separate boxes, each box-forming pair of dividers being connected by a withers beam (6) at an appropriate distance from said vertical poles (3), said withers beam (6) being pivotable upwards and downwards, characterized in that said withers beam (6) is made pivotable together with adjacent loop-shaped dividers (5), the withers beam (6) being affixed to both dividers (5,5') so as to be slidable in the direction of its length, which dividers in turn can pivot by means of a hingeing bush (13) around a tube (9), which is positioned at the vertical poles (3).

2. A structure according to claim 1, characterized in that said withers beam (6) is connected with the dividers (5,5') by means of a support (15) mounted on each divider (5,5'), permitting said withers beam (6) to slide horizontally, if the dividers (5,5') are shifted.

### Patentansprüche

1. Vorrichtung für die Stallung von Kühen in einer Reihe und getrennt von jeder anderen in einem Viehstall, welche Vorrichtung besteht aus bogenförmigen Trennstangen (5,5'), die von senkrechten Pfählen (3) gehalten werden, wodurch getrennte Boxen gebildet werden, wobei jedes Paar von Trennstangen, das eine Box bildet, verbunden ist durch eine Widerriststange (6) in geeignetem Abstand von den senkrechten Pfählen (3), und die Widerriststange (6) auf- und abwärts drehbar ist, dadurch gekennzeichnet, dass die Widerriststange (6) gemeinsam mit den benachbarten bogenförmigen Trennstangen (5) drehbar ausgeführt ist, die Widerriststange (6) so mit beiden Trennstangen (5,5') verbunden ist, dass sie in Richtung ihrer Länge verschiebbar ist, und diese Trennstangen selbst sich mittels einer scharnierenden Buchse (13) um eine Stange (9), welche an den senkrechten Pfählen (3) angebracht ist, drehen können.

2. Vorrichtung gemäss Anspruch 1, dadurch gekennzeichnet, dass die Widerriststange (6) mit den Trennstangen (5,5') durch eine Halterung (15) verbunden ist, die an jeder Trennstange (5,5') angebracht ist, so dass die Widerriststange (6) sich waagerecht verschiebt, wenn die Trennstangen (5,5') auseinandergeschoben werden.

### Revendications

1. Un dispositif pour la mise à l'étable de vaches s'alignées et séparées l'une de l'autre dans une vacherie, ledit dispositif comportant des barres de démarcation (5,5') en formes d'arcs appuyés par des piliers verticaux (3), façonnant des travées séparées, chaque couple de barres de démarcation formant une travée étant raccordé par une barre à garrot (6) à quelque distance appropriée desdits piliers verticaux (3) ladite barre à garrot (6) étant rotátoire en haut et en bas, caractérisé en ce que ladite barre à garrot (6) est construite de manière rotatoire en rapport avec les barres voisines de démarcation en formes d'arcs (5), la barre à garrot (6) attachée au couple de barres de démarcation (5,5') d'une manière glissante dans la direction longitudinale, lesdites barres de démarcation eux-même étant pivotables au moyen d'une douille ginglymée (13) autour d'un tube (9), posé aux piliers verticaux (3).

2. Un dispositif selon la revendication 1, caractérisé en ce que ladite barre à garrot (6) est raccordée aux barres de démarcation (5,5') au moyen d'un support (15), équipé sur chaque barre de démarcation (5,5') de sorte que ladite barre à garrot (6) glisse horizontalement si les barres de démarcation (5,5') sont déplacées.

FIG.1.

FIG.2.

C.L.W. Donkers,
Inventor.

0 090 470